# DEMANDE DE BREVET EUROPEEN

(11) **EP 2 248 712 A1**
(43) Date de publication de la demande: **10.11.2010**
(21) Numéro de dépôt: 10305283.3
(22) Date de dépôt: 23.03.2010
(51) Int. Cl.: B62D 25/20, B62D 37/00

(54) **Dispositif de barres sous la caisse d'un véhicule en vue d'augmenter sa rigidité, barre pour la mise en oeuvre d'un tel dispositif et véhicule équipé d'un tel dispositif**

(30) Priorité: 29.04.2009 FR 0952831
(71) Demandeur: Renault S.A.S., 92100 Boulogne-Billancourt (FR)
(72) Inventeur: Le Jaouen, Guillaume, 78180, MONTIGNY LE BRETONNEUX (FR); Fenal, Francois, 92130, ISSY LES MOULINEAUX (FR); Corbier, Paul, 28360, PRUNAY LE GILLON (FR)

(57) **Abrégé**

L'invention concerne un dispositif de barres sous la caisse d'un véhicule en vue d'augmenter la rigidité de cette dernière, comportant une barre profilée pleine (7) implantée sous la caisse (3) du véhicule, reliée par chacune de ses parties d'extrémité (9) par au moins une vis de fixation (10) à un boîtier de fixation solidaire de la caisse (3), **caractérisé en ce que** chacune desdites parties d'extrémité (9) est aplatie à une épaisseur réduite relativement à celle de ladite barre (7), de manière à permettre d'y positionner ladite vis de fixation (10) en engagement au boîtier de fixation sans que celle-ci ne soit à une altitude sous la caisse (3) inférieure à celle de ladite barre (7) et en ce que l'extrémité de la barre (7) au-delà de ladite partie d'extrémité (9) est de faible longueur et forme un sabot d'extrémité (17) de l'épaisseur de la barre (7), apte à protéger la vis de fixation (10).

## Description

La présente invention concerne un dispositif de barres sous la caisse d'un véhicule en vue d'augmenter sa rigidité, une barre pour la mise en oeuvre d'un tel dispositif et le véhicule équipé d'un tel dispositif.

L'invention est appliquée notamment aux véhicules automobiles cabriolets dont l'absence de toit diminue la rigidité de la caisse, et dont la rigidité en torsion de la caisse nécessite d'être augmentée.

L'invention vise à augmenter la rigidité de la caisse d'un véhicule automobile, notamment cabriolet, en assurant un bon compromis entre sa garde au sol et le débattement du train arrière.

On connaît à cet effet des dispositifs de barres tubulaires disposés sous la caisse de véhicule et dont les parties de raccordement à la caisse peuvent être écrasées. L'inconvénient est que la section des barres n'est pas pleine et l'efficacité des raccordements est faible. Par ailleurs, l'implantation de barres pleines permet d'avoir une section de matière importante mais leur dimensionnement rend difficile le respect de la garde au sol du véhicule.

L'invention vise à remédier à ces inconvénients et propose un dispositif de barres sous la caisse d'un véhicule en vue d'augmenter la rigidité de cette dernière, pour un véhicule automobile cabriolet notamment, comportant au moins une barre profilée pleine implantée sous la caisse du véhicule, reliée par chacune de ses parties d'extrémité ou proche par au moins une vis de fixation à un boîtier de fixation solidaire de la caisse, **caractérisé en ce que** chacune desdites parties d'extrémité ou proche est aplatie à une épaisseur réduite relativement à celle de ladite barre, de manière à permettre d'y positionner la au moins une dite vis de fixation en engagement au boîtier de fixation sans que celle-ci ne soit à une altitude sous la caisse inférieure à celle de ladite barre et en ce que l'extrémité de la barre au-delà de ladite partie d'extrémité est de faible longueur et forme un sabot d'extrémité de l'épaisseur de la barre, apte à protéger la vis de fixation.

Ladite barre est avantageusement en acier standard et les parties d'extrémité ou proches de la barre peuvent être issues d'emboutissage sous presse à forme générale aplatie et de préférence élargie.

Ladite vis de fixation est logée dans la partie à forme générale aplatie de préférence médiane de la partie d'extrémité ou proche de la barre.

Cette configuration de raccordement de la barre à la caisse ne réduit sensiblement pas la résistance de la fixation de la barre à la caisse du véhicule relativement à une section de barre non traitée. Au contraire, l'élargissement de la partie de raccordement de la barre à la caisse favorise la jonction de la barre au boîtier et donc augmente la résistance à la torsion de la liaison de la barre à la caisse.

Ladite partie d'extrémité aplatie de la barre peut être évidée de façon complémentaire de la tête de vis de fixation de façon à limiter l'emprise de celle-ci sous la barre.

Ladite partie d'extrémité est avantageusement chanfreinée de manière à faciliter le passage d'obstacles au cours du déplacement du véhicule.

Ladite partie d'extrémité aplatie peut être suffisamment longue pour loger au moins deux vis de fixation, par exemple positionnées en ligne dans la partie longitudinale médiane de la barre.

La ou les têtes de vis peuvent être bombées, de façon classique.

Le dispositif peut comprendre deux barres disposées convergentes l'une vers l'autre à la partie arrière du véhicule, par exemple fixées avec symétrie par rapport à un plan longitudinal médian du véhicule, chacune à la partie centrale du véhicule sur un boîtier de fixation latéral proche d'un bas volet du véhicule et à une même partie arrière médiane du véhicule sur un boîtier de fixation proche de la jupe arrière du véhicule.

Cette disposition selon l'invention apporte plus de liberté dans le positionnement en altitude des barres sous la caisse (gain de la hauteur de tête de vis) pour respecter la garde au sol du véhicule en donnant la possibilité de descendre et donc d'écarter davantage lesdites barres du train arrière du véhicule, relativement à des barres classiques, ce qui permet un débattement plus grand du train arrière du véhicule.

Cette disposition des barres sous caisse augmente en outre la rigidité de celle-ci, notamment en torsion de plus de 50% pour un véhicule cabriolet.

L'invention concerne également une barre profilée pleine pour la mise en oeuvre du dispositif de barres défini précédemment, **caractérisée en ce que** chacune des parties d'extrémité ou proche de celle-ci est aplatie et forme une partie de logement d'au moins une vis de fixation de la barre à un boîtier de fixation de la caisse du véhicule, et un véhicule comprenant un dispositif de barres sous caisse de véhicule tel que défini précédemment.

L'invention est illustrée ci-après à l'aide d'un exemple de réalisation présenté à titre non limitatif et en référence aux dessins annexés sur lesquels :
- la figure 1 est une vue en perspective d'un dispositif de barres selon l'invention représenté de façon schématique avec une seule barre sous la caisse du véhicule, et
- la figure 2 est une vue en perspective agrandie d'une partie d'extrémité d'une barre fixée à un boîtier de fixation de la caisse du véhicule.

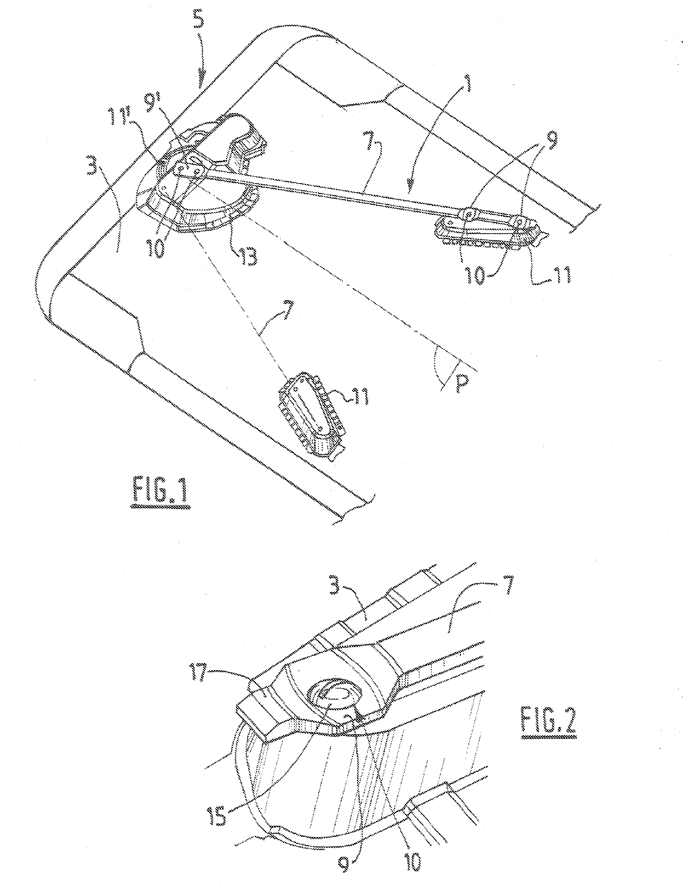

Avec référence aux dessins, on a représenté un dispositif de barres 1 sous caisse 3 selon l'invention pour un véhicule automobile 5, visible sous la caisse 3 du véhicule 5 (figure 1).

Ce dispositif 1 comporte deux barres profilées rectilignes identiques 7 disposées sous la moitié arrière de la caisse 3 du véhicule 5. Ces barres 7 sont fixées par leurs parties d'extrémité 9, 9' au moyen de vis de fixation 10 sur des boîtiers de fixation correspondants 11, 11' solidaires de la caisse 3, par exemple soudés à celle ci. Elles sont disposées en V, pointe vers l'arrière selon un plan de symétrie P longitudinal médian de la caisse 3. Pour cette raison, une seule barre 7 est représentée, l'autre l'étant selon une ligne en trait mixte.

Chacune d'elles comporte au niveau de son extrémité tournée vers l'extérieur deux parties d'extrémité latérales 9 jumelées et proches, destinées à être fixées à un boîtier de fixation latéral médian 11 de la caisse 3, lequel est proche d'un bas volet (non représenté) de celle-ci, et une partie d'extrémité 9' opposée aux précédentes et médiane arrière relativement à la caisse 3. Celle-ci est fixée à un boîtier de fixation arrière 11' commun aux deux barres 7 disposé au niveau du logement 13 de la roue de secours du véhicule.

Les barres 7 sont disposées en outre sensiblement parallèles au plan de dessous de la caisse 3, à une hauteur par rapport au sol sur le véhicule en service supérieure ou égale à environ 120mm représentant la garde au sol normalisée du véhicule.

Ces barres 7 sont pleines en acier standard. Elles ont une section rectangulaire, d'environ 30mm de largeur et 10mm d'épaisseur.

Les parties d'extrémité 9, 9' de ces barres sont aplaties (figure 2), issues d'emboutissage sous presse à une épaisseur d'environ 5mm et la section aplatie 9, 9' est notablement élargie, par exemple dans une configuration sensiblement octogonale ou autre. Cette section aplatie reçoit au moins une vis de fixation 10 au boîtier de fixation correspondant, la vis étant montée traversante sur celle-ci sans que l'extrémité supérieure de sa tête 15 ne dépasse du plan correspondant de la barre 7. Ceci permet de respecter la garde au sol normalisée du véhicule, apporte une bonne liaison de fixation de la barre 7 au boîtier de fixation correspondant 11, 11' en raison de l'augmentation de la largeur de la section d'application de la barre au boîtier et contribue à contenir la rigidité, notamment en torsion, de la barre sur la caisse.

La partie d'extrémité arrière aplatie 9' de barre est suffisamment longue pour loger deux vis de fixation 10 au boîtier de fixation 11', disposées en ligne dans le plan longitudinal médian de la barre, voir la partie d'extrémité arrière de la barre sur la figure 1. Ceci renforce la liaison de la barre au boîtier.

Les parties d'extrémité jumelées 9 à l'opposé sont formées distantes l'une de l'autre logeant chacune une vis de fixation 10 au boîtier 11, voir les parties d'extrémité avant des barres. Cette dernière disposition augmente également la résistance de la fixation de chacune des parties d'extrémité de barre au boîtier de fixation correspondant. Ceci permet de transférer au maximum la rigidité de la barre à la caisse et contribue à augmenter largement la rigidité de la caisse des véhicules automobiles cabriolets, notamment de plus de 50% en torsion.

Il est à noter que les extrémités des barres 7 sont non aplaties et qu'elles forment un sabot 17 de protection de la vis de fixation 10 sur la partie d'extrémité aplatie 9, 9' de la barre à faible distance de celle-ci (1cm à 3cm). Ce sabot 17 est chanfreiné à l'extrémité pour faciliter le passage d'obstacles susceptibles de le heurter.

## Revendications

1. Dispositif de barres (1) sous la caisse (3) d'un véhicule (5) en vue d'augmenter la rigidité de cette dernière, pour un véhicule automobile cabriolet notamment, comportant au moins une barre profilée pleine (7) implantée sous la caisse (3) du véhicule (5), reliée par chacune de ses parties d'extrémité ou proche (9, 9') par au moins une vis de fixation (10) à un boîtier de fixation (11, 11') solidaire de la caisse (3), **caractérisé en ce que** chacune desdites parties d'extrémité ou proche (9, 9') est aplatie à une épaisseur réduite relativement à celle de ladite barre (7), de manière à permettre d'y positionner la au moins une dite vis de fixation (10) en engagement au boîtier de fixation (11, 11') sans que celle-ci ne soit à une altitude sous la caisse (3) inférieure à celle de ladite barre (7) **et en ce que** l'extrémité de la barre (7) au-delà de ladite partie d'extrémité (9, 9') est de faible longueur et forme un sabot d'extrémité (17) de l'épaisseur de la barre (7), apte à protéger la vis de fixation (10).

2. Dispositif de barres (1) selon la revendication 1, **caractérisé en ce que** la barre (7) est en acier standard et les parties d'extrémité ou proche (9, 9') de la barre (7) sont issues d'emboutissage sous presse à forme générale aplatie et élargie.

3. Dispositif de barres (1) selon la revendication 2, **caractérisé en ce que** ladite vis de fixation (10) est logée dans la partie à forme générale aplatie et élargie de la partie d'extrémité ou proche (9, 9') de la barre (7).

4. Dispositif de barres (1) selon l'une quelconque des revendications 1 à 3, **caractérisé en ce que** ladite partie d'extrémité aplatie (9, 9') est évidée de façon complémentaire de la tête (15) de vis de fixation (10) de façon à limiter l'emprise de celle-ci sous la barre (7).

5. Dispositif de barres (1) selon l'une quelconque des revendications précédentes, **caractérisé en ce que** ladite extrémité de la barre est chanfreinée.

6. Dispositif de barres (1) selon l'une quelconque des revendications précédentes, **caractérisé en ce que** ladite partie d'extrémité (9') est suffisamment longue pour loger deux vis de fixation (10).

7. Dispositif de barres (1) selon l'une quelconque des revendications précédentes, **caractérisé en ce qu'**il comprend deux barres (7) disposées convergentes l'une vers l'autre à la partie arrière du véhicule (5), par exemple fixées avec symétrie par rapport à un plan longitudinal médian P du véhicule (5), chacune à la partie centrale du véhicule (5) sur un boîtier de fixation latéral (11) proche d'un bas volet du véhicule (5) et à une même partie arrière médiane du véhicule (5) sur un boîtier de fixation (11') proche de la jupe arrière du véhicule (5).

8. Barre profilée pleine (7) pour la mise en oeuvre du dispositif de barres (1) selon l'une quelconque des revendications précédentes, **caractérisée en ce que** chacune des parties d'extrémité ou proche (9, 9') de celle-ci est aplatie et forme une partie de logement d'au moins une vis de fixation (10) de la barre à un boîtier de fixation (11, 11') de la caisse (3) du véhicule.

9. Véhicule (5) **caractérisé en ce qu'**il comprend un dispositif de barres (1) selon l'une quelconque des revendications 1 à 7.
